# EUROPEAN PATENT APPLICATION

(11) **EP 2 781 439 A1**
(43) Date of publication of application: **24.09.2014**
(21) Application number: 13192946.5
(22) Date of filing: 14.11.2013
(51) Int. Cl.: B62H 3/04

(54) **Bicycle stand**

(30) Priority: 19.03.2013 AU 2013201659
(71) Applicant: Design Design, Springwood, Queensland QLD 4127 (AU)
(72) Inventor: Huntington, Justin, Springwood, Queensland 4127 (AU); Huntington, Randal, Springwood, Queensland 4127 (AU)
(74) Representative: Hopkin, Tobias J.B.

(57) **Abstract**

A stand for maintaining a bicycle in an upright position, wherein the stand consists of non-movable parts comprising a base (6) having a front end, a back end, and a middle portion, wherein each of the front end, back end and middle portion comprise at least one inclined member (4, 3, 1) and wherein the inclined members (4, 3, 1) are configured along an axis of the base that bisects the front and back ends and middle portion, and wherein the inclined members (4, 3, 1) are positioned relative to each other and in a shape that allows the distal ends of the inclined members (4, 3, 1) to be tangent to the circumference of the tire of one of the wheels of the bicycle and to contact different portions of the tire thereby holding the wheel in place and maintaining the bicycle in an upright position.

## Description

### Field of the invention

The present invention relates generally to a bicycle stand. More specifically, the invention relates to a one piece bicycle stand that allows the display of bicycles.

### Cross-reference to related applications

This application claims priority to Australia Patent Application number 2013201659 filed on March 19, 2013, which is hereby incorporated by reference in its entirety.

### Background to the invention

A bicycle, which is typically constructed of tubular frame members and a pair of wheels having tires, has traditionally included a kickstand to keep the bicycle in an upright position when the bicycle is not in use. The kickstand is connected to the bicycle at one end in which the other end pivots to either a substantially vertical position when the bicycle is not in use or a substantially horizontal position when the bicycle is in use.

However, certain bicycles such as, for example, mountain bicycles and high-end road bicycles have been manufactured without kickstands. These bicycles are common place in today's society and are vehicles used routinely for exercise, enjoyment, and transportation.

One reason for excluding kickstands is to reduce the overall weight of a bicycle. Another reason is that kickstands may actually be hazardous when a mountain bicycle is taken over rugged, off-road conditions as the kickstands may catch rocks, tree trunks, a leg of a rider. In the absence of a kickstand, other means are required to support the bicycle in an upright position when the bicycle is not in use. Also, within the area of retail bicycle outlets/shops, there is a need to have bicycles presented to customers in the most upright position. In using a kickstand of a bicycle, the bicycle is slanted toward the side of the bicycle that has the kickstand. Even more, the kickstand does not completely ensure that the bicycle will not fall over. Damage to components of the bicycle may occur if the bicycle falls over from an upright position.

In light of the above, there is a need to have an apparatus that holds a bicycle without a kickstand in an upright position when the bicycle is not in use. There is also a need for an apparatus that stands up a bicycle with or without a kickstand in the most upright position, such need for example being the selling of the bicycle in a store/shop. There is also a need to present multiple bicycles for selling in a store/shop.

Bicycles without kickstands lack the ability to stand in an upright position when not in use. A bicycle without a kickstand, therefore, often must be propped against a vertical surface, such as a wall or tree, or placed on the ground in order to support the bicycle when not in use. However, propping a bicycle against a vertical surface or placing the bicycle on the ground for storage of the bicycle, or to perform a maintenance activity such as cleaning the bicycle, can be unstable, inconvenient, unsafe and may damage one or more components of the bicycle. Other methods include using expensive equipment to hold the bicycle in place. However, use of expensive equipment suffers from the cost involved in obtaining the equipment and that the bicycle sometimes has to be lifted into place to be held by the equipment. Further, since some bicycles and tires are expensive it is important to be able to hold or store the bicycle in an upright position without damaging the bicycle, the bicycle frame, or the tires. Additionally, some of the previous stands used to hold a bicycle have been relatively complicated in design and have required users to exercise significant care and skill in order to use such stands.

Other shortcomings of prior bicycle stands include: (1) generally fit one wheel size, or if they fit different wheel sizes, the prior stands must be adjusted; (2) unable to be connected to another stand of the same design; (3) if connection is possible, there is only one way to connect the stands thus restricting how two or more bicycles may be displayed; (3) the prior stands may comprise moving parts which minimises strength and durability.

The present invention is predicated on the discovery and manufacture of a bicycle stand that obviates and overcomes many of the disadvantages and shortcomings associated with prior methods or stands for holding or storing a bicycle in an upright position.

### Summary of the invention

According to the present invention there is provided a stand that maintains a bicycle in an upright position, whereby the stand consists of non movable parts comprising a base having a front end, a back end, and a middle portion, whereby each of the front end, back end and middle portion comprise at least one inclined member and whereby the distance between the base and the distal end of the inclined member of the back end is greater than (1) the distance between the base and the distal end of the inclined member of the front end and (2) the distance between the base and the distal end of the inclined member of the middle portion, whereby the inclined members are configured along an axis of the base that bisects the front and back ends and middle portion, and whereby the inclined members are positioned relative to each other and in a shape that allows the distal ends of the inclined members to be tangent to the circumference of the tire of one of the wheels of the bicycle and to contact different portions of the tire thereby holding the wheel in place and maintaining the bicycle in an upright position.

In another embodiment, the stand maintains a bicycle with any wheel size without adjustment or modification.

In one embodiment, the one of the wheels is the rear wheel. In another embodiment, the one of the wheels is the front wheel.

In another embodiment, the stand is one solid piece.

In a further embodiment, the stand comprises three or more inclined members. In another embodiment, the stand consists of three inclined members. In another embodiment, the back end comprises one inclined member. In another embodiment, the front end comprises one inclined member and the back end comprises one inclined member. In another embodiment, the front end comprises one inclined member, the back end comprises one inclined member, and the middle portion comprises one inclined member. In a further embodiment, the three inclined members are positioned along an axis of the base that bisects the front end, back end, and middle portion.

The length of the inclined member of the back end is greater than the length of any other inclined member. The inclined member of the back end comprises two male members running along the length of the inclined member. In one embodiment, the male members contact each other only at the distal end of the inclined member. In another embodiment, the male members contact each other substantially from the base to the distal end of the inclined member. In yet another embodiment, the male members form one plate with an angled surface along the length of the inclined member. A male member may comprise two or more indentations proximal to the base.

In another embodiment, the distal end of the male members form a receptacle to receive a portion of the tire of the wheel of the bicycle. In another embodiment, the receptacle is a fork, wedge or notch. In another embodiment, the receptacle is in the shape of an inverted 'V' when viewing the stand from the top from a front perspective.

The inclined member at the front end of the base is substantially similar in size and shape to the inclined member in the middle portion. Each of the distal ends of the inclined members of the front end and middle portion comprise a recess member. Each of the recess members may consist of a notch or slot. In one embodiment, the recess member of the inclined member of the front end is a notch. In another embodiment, the recess member of the inclined member of the middle portion is a slot. In a further embodiment, the slot completely bisects the inclined member of the middle portion. The slot and notch accept a portion of the tire of the wheel of the bicycle.

In a further embodiment, the inclined members are inclined toward the back end of the stand. In another embodiment, the inclined members are inclined toward the front end of the stand. The inclined members are inclined between about 30 degrees and about 70 degrees, between about 40 degrees and about 60 degrees and preferably approximately 45 degrees.

The stand is a solid piece cut and shaped from one sheet or plate. The process of cutting may include any means of cutting to achieve the invention. In one embodiment, the process includes implementation of a profile cutting system. The system may incorporate a laser, plasma or water jet. Cutting may be achieved by use of oxy-fuel. The process may involve computer numerical controlled (CNC) cutting. The accuracy of the cutting may be plus minus 0.25 mm. The stand may be manufactured by pressed mould.

In another aspect, there is provided two or more stands sequentially linked to each other. The stands are linked by spacing bars to maintain even distance between the stands thus maintaining an even distance between each of the bicycles being held in an upright position by the stands. The stands may be linked to each other in at least three different arrangements by use of the spacing bars. The stands may be placed side by side or placed off-center from one another, such that each of the stands is angled similarly to one another.

In one embodiment, the spacing bar is a longitudinal arm with a pair of indentations near each end of the arm. In another embodiment, an indentation from one pair engages an indentation on a male member, whereby the indentation on the male member is proximal to the base. The indentations located on the spacing bars may engage with the indentations of the male members in any arrangement that achieves sequential linking of two or more stands. In one arrangement for linking two stands, two indentations closest to the centre of a spacing bar engage two male members, one from each of the two stands. This arrangement results in sequential side by side placing of the two stands. The spacing bar does not traverse a stand in this arrangement. In arranging two stands to be off-center from each other, the spacing bar traverses one of the stands. In one embodiment, the left indentations from both pairs of indentations on the spacing bar are engaged with the indentations on the male members. In another embodiment, the right indentations from both pairs of indentations on the spacing bar are engaged with the indentations on the male members.

The stand may comprise any type material or combination of materials that provide adequate strength to hold the bicycle in an upright position. In one embodiment, the material may be metal or plastic. In a further embodiment, the metal may be steel or aluminium. The steel may be mild steel, low alloy carbon steel or stainless steel. The material may be a metal alloy or glass reinforced nylon.

In one embodiment, there is use of the stand to hold a bicycle, the use comprising rolling the bicycle on to the stand. In a second embodiment, the stand holds the bicycle via one of the bicycle wheels. In a further embodiment, use of the stand is to display the bicycle in a retail store. Use may comprise two or more stands whereby the stands are sequentially linked to each other.

In a further embodiment, the stands may be nested inside each other for easy transport and storage.

In another embodiment, the stand possesses adequate weight to resist movement when the bicycle is moved in or out of the stand.

In a further aspect, the invention provides a method of maintaining a bicycle in an upright position comprising the step of: rolling the bicycle into a stand that consists of non-movable parts comprising a base having a front end, a back end, and a middle portion, wherein each of the front end, back end and middle portion comprise at least one inclined member and wherein the distance between the base and the distal end of the inclined member of the back end is greater than (1) the distance between the base and the distal end of the inclined member of the front end and (2) the distance between the base and the distal end of the inclined member of the middle portion, wherein the inclined members are configured along an axis of the base that bisects the front and back ends and middle portion, and wherein the inclined members are positioned relative to each other such that the distal ends of the inclined members are tangent to the circumference of the tire of one of the wheels of the bicycle thereby contacting different portions of the tire, holding the wheel in place, and maintaining the bicycle in an upright position.

In yet a further aspect, the invention provides a package or kit comprising: a stand for maintaining a bicycle in an upright position, wherein the stand consists of non-movable parts comprising a base having a front end, a back end, and a middle portion, wherein each of the front end, back end and middle portion comprise at least one inclined member and wherein the distance between the base and the distal end of the inclined member of the back end is greater than (1) the distance between the base and the distal end of the inclined member of the front end and (2) the distance between the base and the distal end of the inclined member of the middle portion, wherein the inclined members are configured along an axis of the base that bisects the front and back ends and middle portion, and wherein the inclined members are positioned relative to each other and in a shape that allows the distal ends of the inclined members to be tangent to the circumference of the tire of one of the wheels of the bicycle and to contact different portions of the tire thereby holding the wheel in place and maintaining the bicycle in an upright position; and written instructions for assembling the stand.

The invention will now be described as per the figures below which are examples of the display apparatus and should not be construed in any way as limiting the scope of the invention.

### Brief Description of Drawings

The above and other advantages of the invention will be apparent upon consideration of the following detailed description, taken in conjunction with the accompanying drawings, in which like reference characters refer to like parts throughout, and in which:

Figure 1 is an elevated, side to front on view of the bicycle stand encompassed by the present invention wherein the stand is shown in use. The figure shows the stand maintaining a bicycle in an upright position by holding the back wheel of the bicycle.

Figure 2 is an elevated, side to front on view of the bicycle stand encompassed by the present invention.

Figure 3 is an elevated, side to front on view of a spacing bar.

Figure 4 is a top view of the bicycle stand encompassed by the present invention.

Figure 5 is a side, ground view of the bicycle stand encompassed by the present invention.

Figure 6 is a front on, ground view of the bicycle stand encompassed by the present invention.

Figure 7 is a top view of the spacing bar.

Figure 8 is an elevated, side to front on view of three bicycle stands linked by two spacing bars. The stands are placed at an angle.

Figures 9 is a top view of three bicycle stands linked by two spacing bars. The stands are placed at an angle.

Figure 10 is an elevated, side to front on view of three bicycle stands linked by two spacing bars. The stands are placed side by side.

Figure 11 is a top view of three bicycle stands linked by two spacing bars. The stands are placed side by side.

### Detailed Description

Referring to the accompanying drawings, there is illustrated a bicycle stand that allows the user to roll a bicycle with any wheel size onto the stand without adjustment or modification.

With a view of the shortcomings of prior bicycle stands, the stand of the present invention has distinct advantages such as (1) two or more of the stands of the present invention can be linked to each other at least in three different ways resulting in evenly spaced bicycles in three different arrangements; (2) the stand of the present invention can hold any bicycle with any wheel size in a presentable way without any adjustment or modification; (3) the stand of the prior art has no moving parts to enhance strength and durability; (4) the stand is weighted to a degree which resists movement when the bicycle is moved in or out of the stand. In relation to (1), the stands may be linked by a spacing bar in a side by side fashion or at an angle. As contemplated herein, the distance between the stands when they are side by side are usually greater than when the stands are at an angle.

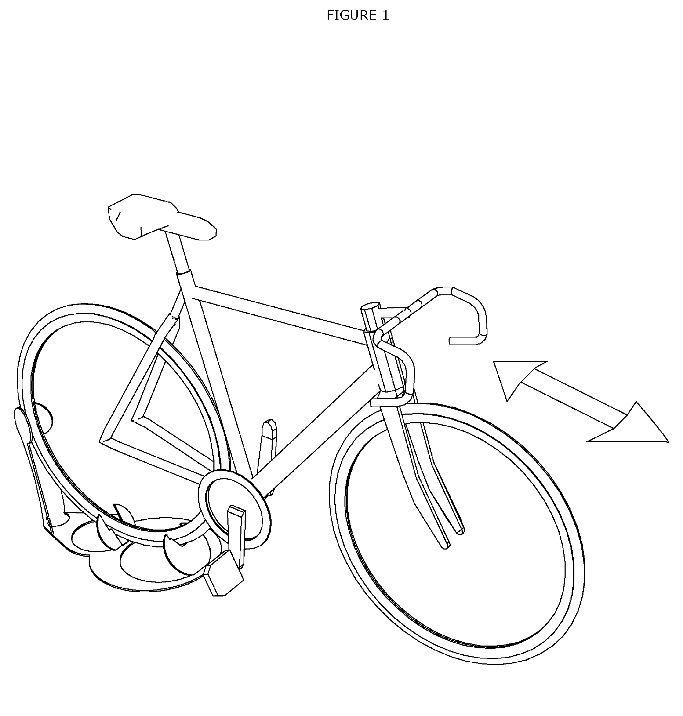

As generally shown in figure 1, there is contemplated herein a stand that holds a bicycle in an upright position by supporting a wheel of the bicycle. The figure indicates the direction of the bicycle in and out of the stand. The bicycle's movement is in the same axial plane as the stand. When the bicycle is fully engaged with the stand, at least one tire of the rear wheel or front wheel of the bicycle is received at three different places along the stand. When fully engaged, the distal ends of the inclined members are tangent to the circumference of the tire of one of the wheels of the bicycle. As used herein, the term "tangent" refers to contact between any one or more members of the stand, such as the distal ends of the inclined members, and at least one tire of the rear or front wheel. The bicycle shown in figure 1 does not form part of the present invention.

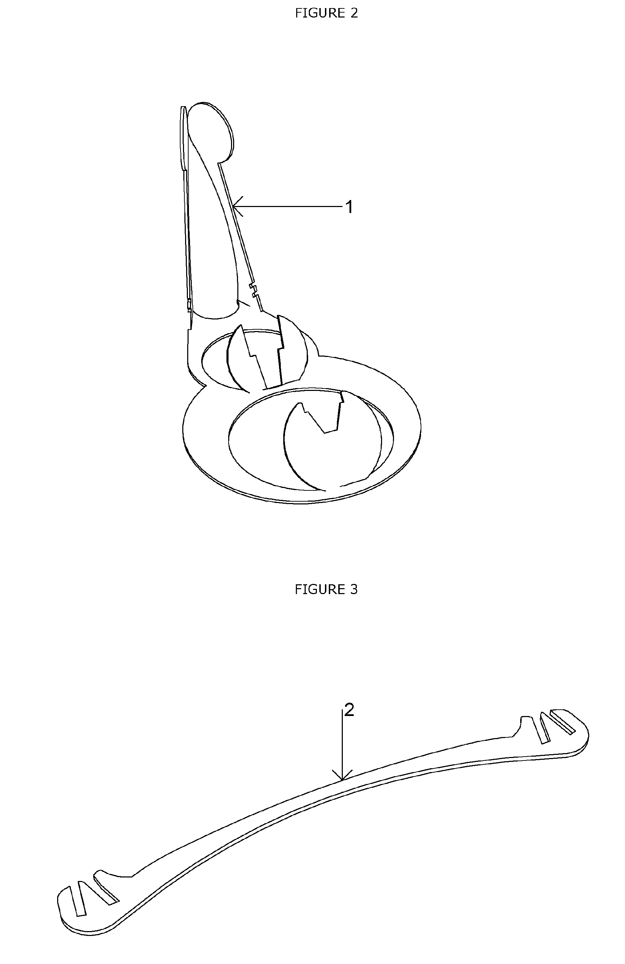

The stand of the present invention is exemplified in figure 2. As contemplated herein, the stand consists of a base and three inclined members with one of the inclined members [1] located at the back end of the stand, that being the part of the stand that is furthest from the bicycle. The length of member [1] is greater than the length of the other two inclined members. The height of member [1] from the base is greater than the height of the other two inclined members. Member [1] consists of two male members running along the length of the inclined member. The male members contact each other at the distal end of the inclined member forming a receptacle to receive a portion of the tire of the wheel of the bicycle.

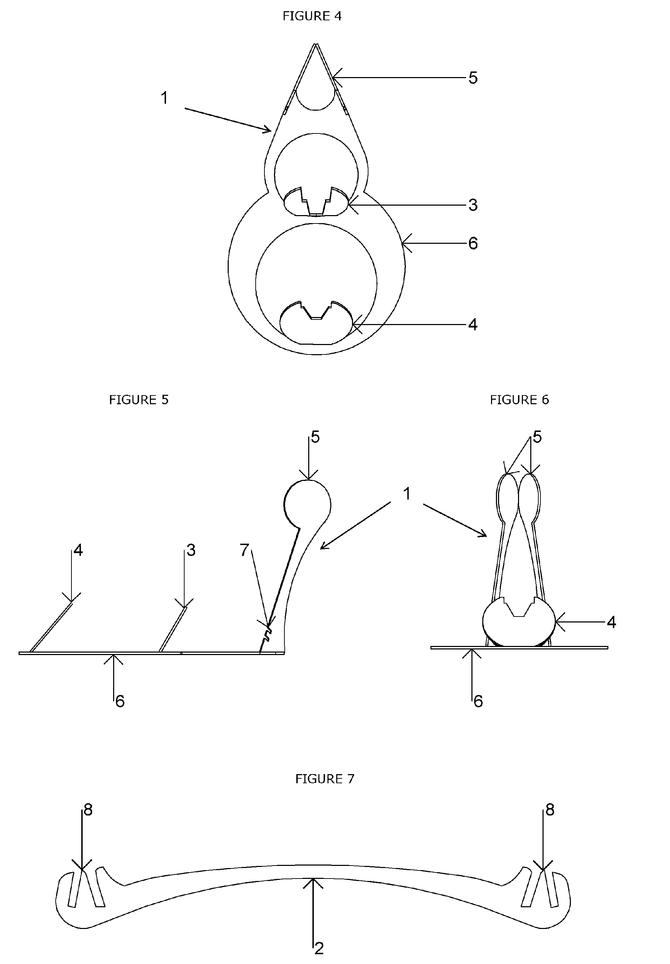

Figure 3 shows a spacing bar [2] that is used to link two stands. The bar has a pair of indentations at each end of the bar. The indentations are generally perpendicular to the axis along the length of the bar. Figure 7 shows spacing bar [2] with pairs of indentations [8].

Figure 4 illustrates the stand of the present invention with base [6] with three inclined members [4], [3] and [1] in which members [4] and [3] are similar in size and comprise recess members. The recess member of member [4] is a notch. The recess member of member [3] is a slot which completely bisects member [3]. Member [1] comprises two male members running along the length of the inclined member. The male members contact each other at the distal end of the inclined member forming receptacle [5] to receive a portion of the tire of the wheel of the bicycle. As can be see in figure 4, the receptacle is in the shape of an inverted 'V' when viewing the stand from the top with a front perspective.

Figure 5 illustrates by example the angle of inclined members [4], [3] and [1] compared to base [6]. In addition, figure 5 shows a side view of receptacle [5] on member [1]. A pair of indentations [7] is shown on member [1] in which one of the pair of indentations [7] fits with one of the pair of indentations [8].

Figure 6 illustrates the relationship between member [1] and member [4] in relation to height and shape. Figure 6 provides a front view of receptacle [5].

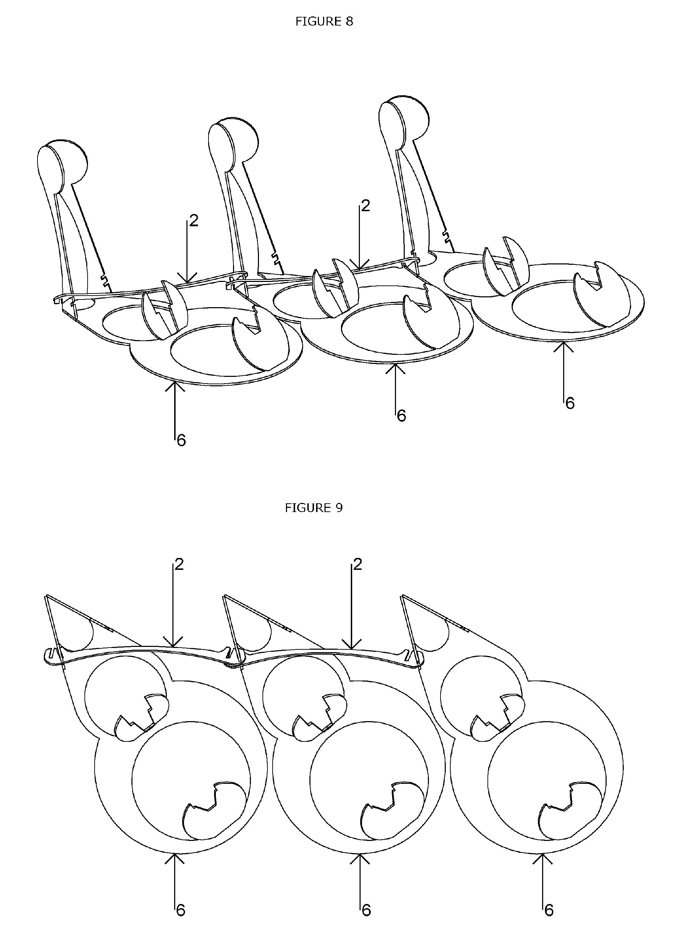

Figures 8 and 9 illustrate how the stands of the present invention may be linked and arranged on a constant angle. Figures 8 and 9 show spacing bars [2] that traverse the stands. These figures also show how, for the example, the indentations [7] may be fitted into indentations [8].

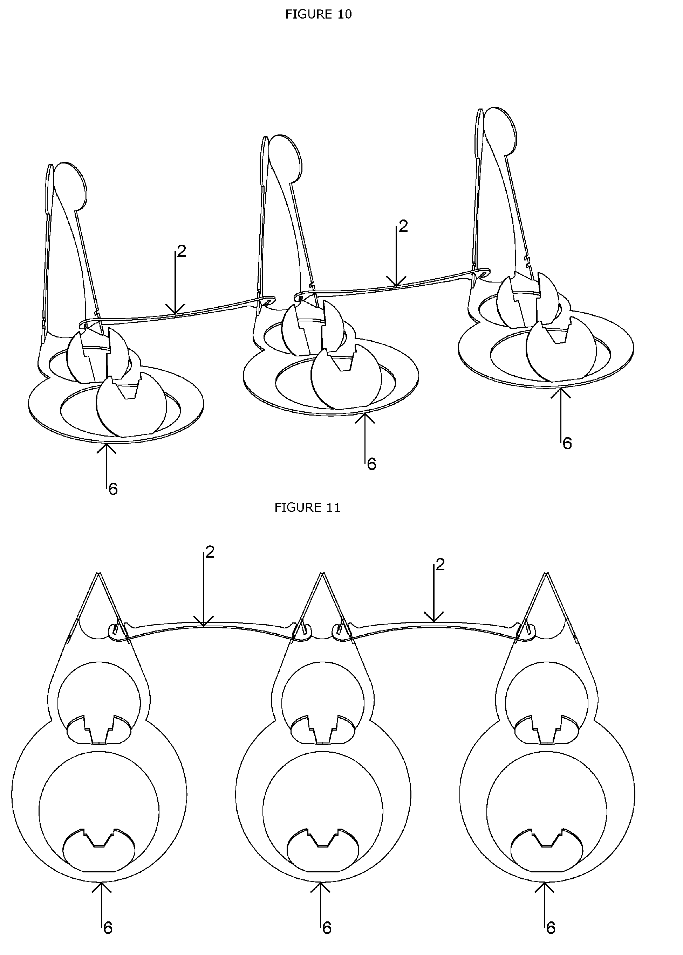

Figures 10 and 11 illustrate how the stands of the present invention may be linked and arranged in a side by side manner. Figures 8 and 9 show that spacing bars [2] do not traverse the stands and create space and separation between the stands. These figures also show how, for the example, the indentations [7] may be fitted into indentations [8].

Further contemplation is a package or kit comprising the stand and instructions for use.

Throughout this specification and the claims, unless the context requires otherwise, the word "comprise" and its variations, such as "comprises" and "comprising", will be understood to imply the inclusion of a stated integer or step or group of integers but not the exclusion of any other integer or step or group of integers or steps.

It will be clear that there has been shown and described herein a bicycle stand which fulfills the various advantages sought therefor. It will become apparent to those skilled in the art, however, that many changes, modifications, variations, and other uses and applications of the subject bicycle stand are possible and contemplated. All changes, modifications, variations, and other uses and applications which do not depart from the spirit and scope of the invention are deemed to be covered by the invention, which is limited only by the claims which follow.

## Claims

1. A stand for maintaining a bicycle in an upright position, wherein the stand consists of non movable parts comprising a base having a front end, a back end, and a middle portion, wherein each of the front end, back end and middle portion comprise at least one inclined member and wherein the distance between the base and the distal end of the inclined member of the back end is greater than (1) the distance between the base and the distal end of the inclined member of the front end and (2) the distance between the base and the distal end of the inclined member of the middle portion, wherein the inclined members are configured along an axis of the base that bisects the front and back ends and middle portion, and wherein the inclined members are positioned relative to each other and in a shape that allows the distal ends of the inclined members to be tangent to the circumference of the tire of one of the wheels of the bicycle and to contact different portions of the tire thereby holding the wheel in place and maintaining the bicycle in an upright position.

2. The stand of claim 1 **characterised in that** the stand maintains a bicycle with any wheel size without adjustment or modification of said stand.

3. The stand of claim 1 or 2 **characterised in that** one of the wheels is the rear wheel or the front wheel.

4. The stand of any of the proceeding claims **characterised in that** the stand is one solid piece.

5. The stand of any of the proceeding claims **characterised in that** the stand comprises three or more inclined members.

6. The stand of any of the proceeding claims **characterised in that** the back end comprises one inclined member.

7. The stand of any of the proceeding claims **characterised in that** the front end comprises one inclined member.

8. The stand of any of the proceeding claims **characterised in that** the front end comprises one inclined member, the back end comprises one inclined member, and the middle portion comprises one inclined member.

9. The stand of any of the proceeding claims **characterised in that** the three inclined members are positioned along an axis of the base that bisects the front end, back end, and middle portion.

10. The stand of any of the proceeding claims **characterised in that** the length of the inclined member of the back end is greater than the length of any other inclined member.

11. The stand of any of the proceeding claims **characterised in that** the inclined member of the back end comprises two male members running along the length of the inclined member.

12. The stand of any of the proceeding claims **characterised in that** the male members contact each other only at the distal end of the inclined member.

13. The stand of any of the proceeding claims **characterised in that** the male members contact each other substantially from the base to the distal end of the inclined member.

14. A method of maintaining a bicycle in an upright position comprising the step of: rolling the bicycle into a stand that consists of non-movable parts comprising a base having a front end, a back end, and a middle portion, wherein each of the front end, back end and middle portion comprise at least one inclined member and wherein the distance between the base and the distal end of the inclined member of the back end is greater than (1) the distance between the base and the distal end of the inclined member of the front end and (2) the distance between the base and the distal end of the inclined member of the middle portion, wherein the inclined members are configured along an axis of the base that bisects the front and back ends and middle portion, and wherein the inclined members are positioned relative to each other such that the distal ends of the inclined members are tangent to the circumference of the tire of one of the wheels of the bicycle thereby contacting different portions of the tire, holding the wheel in place, and maintaining the bicycle in an upright position.

15. A package or kit comprising: a stand for maintaining a bicycle in an upright position, wherein the stand consists of non-movable parts comprising a base having a front end, a back end, and a middle portion, wherein each of the front end, back end and middle portion comprise at least one inclined member and wherein the distance between the base and the distal end of the inclined member of the back end is greater than (1) the distance between the base and the distal end of the inclined member of the front end and (2) the distance between the base and the distal end of the inclined member of the middle portion, wherein the inclined members are configured along an axis of the base that bisects the front and back ends and middle portion, and wherein the inclined members are positioned relative to each other and in a shape that allows the distal ends of the inclined members to be tangent to the circumference of the tire of one of the wheels of the bicycle and to contact different portions of the tire thereby holding the wheel in place and maintaining the bicycle in an upright position; and written instructions for assembling the stand.
